# EUROPEAN PATENT APPLICATION

(11) **EP 4 625 540 A1**
(43) Date of publication of application: **01.10.2025**
(21) Application number: 24875707.2
(22) Date of filing: 15.11.2024
(51) Int. Cl.: H01M 4/38, H01M 4/62, H01M 10/0525

(54) **NEGATIVE ELECTRODE MATERIAL AND LITHIUM ION BATTERY**

(30) Priority: 24.11.2023 CN 202311591084
(71) Applicant: BTR NEW MATERIAL GROUP CO., LTD., Shenzhen, Guangdong 518106 (CN)
(72) Inventor: XIAO, Chengmao, Shenzhen, Guangdong 518106 (CN); HE, Peng, Shenzhen, Guangdong 518106 (CN); REN, Jianguo, Shenzhen, Guangdong 518106 (CN)
(74) Representative: Novagraaf Technologies
(86) International application number: PCT/CN2024/132488
(87) International publication number: WO 2025/108200

(57) **Abstract**

The present disclosure relates to anode material and lithium ion battery. The anode material includes a porous carbonaceous material. A silicon material is distributed inside the porous carbonaceous material. The anode material has a uniformity degree N, and N meets N≥80%. In a Backscattered Electron (BSE) diagram obtained by scanning the anode material using a Scanning Electron Microscope (SEM) in a BSE automatic brightness and contrast mode, in any one of 100 µm*100 µm regions, the number of particles of the anode material having first brightness is recorded as C1, the first brightness indicates the anode material with a gray value in the BSE diagram greater than or equal to 5500, the number of particles of the anode material having second brightness is recorded as C2, the second brightness indicates the anode material with the gray value in the BSE diagram less than 5500, the anode material has a uniformity degree N'=C2/(C2+C1)*100% in the region, and the uniformity degree N of the anode material is an arithmetic mean of at least 10 N's.

## Description

### Cross-Reference to Related Application

This application claims priority to Chinese Patent Application No. 2023115910846 filed to the China National Intellectual Property Administration on November 24, 2023 and entitled "Anode Material and Preparation Method Thereof, and Lithium Ion Battery", the disclosure of which is hereby incorporated by reference in its entirety.

### Technical Field

The present disclosure relates to the technical field of anode materials, and specifically, to anode material and lithium ion battery.

### Background

A silicon-based anode material has the advantages of being high in specific capacity, low in voltage platform, friendly to environment, abundant in resource, etc., and is expected to replace graphite anode in the next generation of lithium ion batteries with a high specific energy. However, silicon has a huge volume change during detachment/embedding, particles are easily pulverized and fall off from a current collector. Furthermore, repeated changes in volume of a silicon material during an electrochemical cycle also lead to continuous destruction and regeneration of an SEI film formed on a surface of the silicon material, causing continuous consumption of lithium ions, thus ultimately resulting in rapid capacity degradation.

Processes such as nanosizing, carbon coating, polymer coating, etc. are generally performed on a silicon anode material for improvement, such that volume expansion of the silicon may be inhibited to a certain extent. Generally, the volume expansion of the silicon is inhibited by depositing the silicon in porous carbon. The preparation of a porous carbonaceous material using a biomass method is a mainstream preparation method currently. However, porous carbon prepared by the existing biomass method generally suffers from uneven activation, and more or less poreless (not activated) particles are present. Since these particles are not activated during the silicon deposition process, pores are few or missed. The silicon is easy to deposit on surfaces of the particles, leading to degradation of expansion performance, cycling performance, and rate performance of the anode material.

Therefore, there is an urgent need to provide a silicon anode material with low expansion, high cycling, and high rate performance.

### Summary

The present disclosure provides anode material and lithium ion battery, which can improve the expansion performance, cycling performance, and rate performance of the anode material.

In order to implement the above objective, a first technical solution of the present disclosure is as follows.

Embodiments of the present disclosure provide an anode material. The anode material includes a porous carbonaceous material. A silicon material is distributed inside the porous carbonaceous material, and the anode material has a uniformity degree N, and N≥80%.

In a Backscattered Electron (BSE) diagram obtained by scanning the anode material using a Scanning Electron Microscope (SEM) in a BSE automatic brightness and contrast mode, in any one of 100 µm*100 µm regions, the number of particles of the anode material having first brightness is recorded as C1, the particles of the anode material having the first brightness indicate the anode material with a gray value in the BSE diagram greater than or equal to 5500, the number of particles of the anode material having second brightness is recorded as C2, the particles of the anode material having the second brightness indicate the anode material with the gray value in the BSE diagram less than 5500, the anode material has a uniformity degree N'=C2/(C2+C1)*100% in the region, and the uniformity degree N of the anode material is an arithmetic mean of the uniformity degrees N' of at least 10 regions.

The technical solution of the present disclosure has at least the following beneficial effects.

The anode material of the present disclosure includes the porous carbonaceous material and the silicon material, and the anode material has the uniformity degree N, N≥80%, indicating that the anode material of the present disclosure is mainly present in a form of the particles with the gray value in the BSE diagram less than 5500. The particles with the gray value in the BSE diagram less than 5500 indicate that the silicon materials in the particles of the anode material are mainly distributed in pores of the porous carbonaceous material, and are uniformly distributed. That is to say, in the present disclosure, based on the total number of the particles of the anode material being 100%, the number proportion of the particles in the anode material in which the silicon material is uniformly distributed in the pores of the porous carbonaceous material is greater than or equal to 80%. This indicates that the porous carbonaceous material of the present disclosure has uniformly-distributed activated pores, and the number of the activated pores is appropriate, such that the silicon material can be mainly distributed in the pores of the porous carbonaceous material, and has a high silicon deposition amount. Furthermore, the uniformity degree N of the present disclosure is obtained by testing the anode material obtained in any one of the 100 µm*100 µm regions. N≥80% indicates a high degree of similarity in the number and distribution of the activated pores of the porous carbonaceous material of the particles of the anode material of the present disclosure, that is, the anode material of the present disclosure has the porous carbonaceous material with good consistency. The porous carbonaceous material with good consistency can improve the dispersivity of the silicon material in the anode material, a volume effect caused by agglomeration of the silicon material during lithium intercalation/lithium detachment can be inhibited, and pulverization of the particles of the anode material is reduced. Meanwhile, during the lithium intercalation/lithium detachment of the anode material, an SEI film is formed within a limited space, such that the stable SEI film is formed, and the structure stability of the anode material is improved, thereby improving the expansion performance, cycling performance, and capacity of the anode material.

### Brief Description of the Drawings

The present disclosure is further described below with reference to the drawings and embodiments.
Fig. 1 is a preparation flowchart of an anode material according to the present disclosure.
Fig. 2 is an SEM diagram of an anode material prepared according Embodiment 1 of the present disclosure.
Fig. 3 is an X-Ray Diffraction (XRD) diagram of an anode material prepared according Embodiment 1 of the present disclosure.
Fig. 4 is a first charging and discharging curve of an anode material prepared according Embodiment 1 of the present disclosure.
Fig. 5 is a cycling performance curve of an anode material prepared according Embodiment 1 of the present disclosure.

### Detailed Description of the Embodiments

In order to better understand the technical solutions of the present disclosure, embodiments of the present disclosure are described in detail below with reference to the drawings.

It is to be clear that the described embodiments are only part of the embodiments of the present disclosure, not all the embodiments. All other embodiments obtained by those of ordinary skill in the art on the basis of the embodiments in the present disclosure without creative work fall within the scope of protection of the present disclosure.

The terms used in the embodiments of the present disclosure are only for describing specific embodiments and are not intended to limit the present disclosure. Singular forms "a/an", "said", and "the" used in the embodiments and appended claims of the present disclosure are also intended to include plural forms unless other meanings are clearly expressed in the context.

It is to be understood that, the term "and/or" used here is merely an association relationship describing related objects, which means that there may be three relationships, for example, A and/or B may indicate three cases: A exists alone, A and B exist simultaneously, and B exists alone. In addition, the character "/" as used herein generally indicates an "or" relationship between the front and back associated objects.

The preparation of a porous carbonaceous material using a biomass method is a mainstream preparation method currently. However, porous carbon prepared by the existing biomass method generally suffers from uneven activation, and more or less poreless (not activated) particles are present. Since these particles are not activated during the silicon deposition process, pores are few or missed, resulting in low or almost no silicon deposition, leading to degradation of the performance of the anode material.

Embodiments of the present disclosure provide an anode material, including a porous carbonaceous material. A silicon material is distributed inside at least part of the porous carbonaceous material, and the anode material has a uniformity degree N, and N≥80%.

In a Backscattered Electron (BSE) diagram obtained by scanning the anode material using a HITACHI S4800 SEM in a BSE automatic brightness and contrast mode, in any one of 100 µm*100 µm regions, the number of particles of the anode material having first brightness is recorded as C1, the anode material having the first brightness indicates the anode material with a gray value in the BSE diagram greater than or equal to 5500, the number of particles of the anode material having second brightness is recorded as C2, the anode material having the second brightness indicates the anode material with the gray value in the BSE diagram less than 5500, the anode material has a uniformity degree N'=C2/(C2+C1)*100% in the region, and the uniformity degree N of the anode material is an arithmetic mean of the uniformity degrees N' of at least 10 regions.

In the above solution, the anode material of the present disclosure includes the porous carbonaceous material and the silicon material, and the anode material has the uniformity degree N, N≥80%, indicating that the anode material of the present disclosure is mainly present in a form of the particles with the gray value in the BSE diagram less than 5500. The particles with the gray value in the BSE diagram less than 5500 indicate that the silicon materials in the particles of the anode material are mainly distributed in pores of the porous carbonaceous material, and are uniformly distributed. That is to say, in the present disclosure, based on the total number of the particles of the anode material being 100%, the number proportion of the particles in the anode material in which the silicon material is uniformly distributed in the pores of the porous carbonaceous material is greater than or equal to 80%. This indicates that the porous carbonaceous material of the present disclosure has uniformly-distributed activated pores, and the number of the activated pores is appropriate, such that the silicon material can be mainly distributed in the pores of the porous carbonaceous material, and a high deposition amount of the silicon material is achieved. Furthermore, the present disclosure is obtained by testing the anode material obtained in any one of the 100 µm*100 µm regions, indicating that the similarity in the number and distribution of the activated pores of the porous carbonaceous material of the particles of the anode material of the present disclosure is in a high degree, that is, the anode material of the present disclosure has the porous carbonaceous material with good consistency. The porous carbonaceous material with good consistency can improve the dispersivity of the silicon material in the anode material, a volume effect caused by agglomeration of the silicon material during lithium intercalation/lithium detachment can be reduced, and pulverization of the particles of the anode material is reduced. Meanwhile, during the lithium intercalation/lithium detachment of the anode material, an SEI film is formed within a limited space, such that the stable SEI film is formed, and the structure stability of the anode material is improved, thereby improving the expansion performance, cycling performance, and capacity of a battery prepared by the anode material.

Since there is a great difference in the conductivity of the carbonaceous material and the silicon material, when the anode material is in an SEM-BSE automatic brightness and contrast mode, the anode material particles with high conductivity generally have a relatively dark color, that is to say, the deposition amount of the silicon in the anode material in the porous carbonaceous material is relatively small, or the color of the particles of the porous carbonaceous material without depositing the silicon is relatively dark. The anode material particles with low conductivity generally have a bright color, that is to say, the color of the anode material particles in which the silicon material is mainly deposited in the porous carbonaceous material with uniformly-distributed pores is relatively bright, which is generally bright white. In the present disclosure, the gray value 5500 is used as a standard to determine whether the color of the material particles is dark or bright. The anode material with the gray value greater than or equal to 5500 indicates that the surface of the material is relatively dark, that is, the material particles have the first brightness, and the material particles having the first brightness indicate that less silicon material is deposited inside the anode material particles, that is, the deposition amount of the silicon material is small. The anode material with the gray value less than 5500 indicates that the surface of the material is relatively bright, that is the material particles have the second brightness, the material particles having the second brightness indicate that the silicon material is mainly deposited in the porous carbonaceous material with uniformly-distributed pores, and the deposition amount of the silicon material is large, that is, there are more silicon materials in the anode material particles.

In the present disclosure, the uniformity degree N is tested and calculated by the HITACHI S4800 SEM. Specifically, the anode material particles are scanned by adjusting the SEM in the BSE automatic brightness and contrast mode, an image obtained through scanning is converted into a grayscale image, and the grayscale image is calculated by using ImageJ image processing software. Specifically, the ImageJ image processing software is used to open the grayscale image, a region of the particles required for which a gray value needs to be calculated is selected by a "Marquee" tool, the box selection region is any region formed by 100 µm*100 µm, then Ctrl+1 and Ctrl+3 keys are pressed in sequence to obtain a grayscale changing curve of all particles, then a vertical line is drawn to a horizontal axis at each trough point by using a line tool (rectangular or rounded rectangular selection), a plurality of different closed figures are formed under the grayscale changing curve, and finally, the closed figures except the first and last are clicked in sequence by using a wand (tracing) tool, so as to obtain a total gray value of each figure, which is recognized as the gray values of the plurality of particles in the box selection region. The uniformity degrees N' of at least 10 box selection regions are obtained by repeating the above steps, and then an arithmetic mean of the uniformity degrees N' of all the box selection regions is calculated to obtain the uniformity degree N.

In some implementations, N may be, for example, 80%, 86%, 88%, 90%, 93%, 95%, 97%, 99%, 100%, etc., or may also definitely be other values within the above range, and the present disclosure is not limited thereto. Within the above limited range, it indicates that the porous carbonaceous material has the appropriate number of uniformly-distributed activated pores, such that the silicon material can be mainly distributed in the pores of the porous carbonaceous material, the content of the silicon material in the porous carbonaceous material is high, and the anode material is relatively bright in the SEM-BSE automatic brightness and contrast mode. If N is less than 80%, it indicates that the distribution uniformity of the activated pores in the porous carbonaceous material is poor, such that there are a certain number of particles with few or no activated pores, leading to little or no deposition of the silicon material inside porous carbonaceous material, thus resulting in degradation of the performance of the anode material obtained. Preferably, the uniformity degree of the anode material is 86%≤N≤99%.

In some implementations, the silicon material is also distributed on at least partial surface of the porous carbonaceous material.

In some implementations, the porous carbonaceous material includes at least one of hard carbon, soft carbon, graphite, a mesocarbon microbead, activated carbon, and carbon gel.

In some implementations, the porous carbonaceous material includes micropores. The micropores refer to pores with a pore diameter less than 2 nm. The micropores are activated pores, facilitating the filling of the silicon material. The silicon material filled inside the micropores can guarantee the structural compactness of the porous carbonaceous material, such that structure collapse does not occur in the anode material during a compaction process of preparing an electrode.

In some implementations, based on a total number of pores in the porous carbonaceous material being 100%, a number proportion of the micropores is greater than or equal to 80%, which may specifically be 80%, 85%, 90%, 92%, 95%, 97%, or 99%, etc., or may also definitely be other values within the above range, and the present disclosure is not limited thereto. Within the above limited range, it indicates that there are more activated pores in the present disclosure. The activated pores have an energy storage function, and can reduce electrolyte diffusion resistance, thereby improving the capacity performance and rate performance of the anode material. Preferably, the number proportion of the micropores in the porous carbonaceous material is greater than or equal to 90%, and more preferably, the number proportion of the micropores in the porous carbonaceous material is greater than or equal to 92%. In the present disclosure, the number of the micropores is determined through nitrogen desorption. If the number of the micropores in the porous carbonaceous material is less than 80%, it indicates that the number of the micropores in porous carbon is small, and a filling amount of the silicon material is small, not facilitating the improvement of the capacity performance of the anode material.

In some implementations, pores in the porous carbonaceous material include micropores with the pore diameter less than 2 nm, and based on a total pore volume, a volume proportion of the micropores is ≥80%. Specifically, the volume proportion of the micropores may be 80%, 82%, 85%, 88%, 90%, 92%, 93%, 95%, 98%, or 99%, etc., or may definitely be other values within the above range, which is not limited herein. It may be understood that, sizes of silicon material particles deposited in the pores of the porous carbonaceous material are determined according to the sizes of the pores. If the volume proportion of the micropores is higher, an average pore diameter of the pores of the porous carbonaceous material is smaller, and particle sizes of the silicon material particles deposited in the pores of the porous carbonaceous material are smaller. The particle sizes of the silicon material particles deposited in the pores of the porous carbonaceous material are small, and volume expansion of the anode material during the cycling process is small, such that the cycling performance of the anode material is improved.

In some implementations, an average pore diameter of the pores in the porous carbonaceous material is less than or equal to 5 nm, which may be, for example, 1 nm, 1.3nm, 1.8nm, 2 nm, 3 nm, 4 nm, or 5 nm, etc., or may also definitely be other values within the above range, and the present disclosure is not limited thereto. Preferably, the average pore diameter of the pores in the porous carbonaceous material is less than or equal to 2 nm; and preferably, the average pore diameter of the pores in the porous carbonaceous material is less than or equal to 1.8 nm.

In some implementations, the silicon material comprises at least one of crystalline silicon, a silicon oxide material, amorphous silicon, and silicon alloy. The silicon oxide material includes a silicon oxide SiOₓ, where 0 < x≤2. The silicon oxide is a silicon oxygen complex, containing an oxygen atom and a silicon atom. A molar ratio of the oxygen atom to the silicon atom is 0-2 and does not include 0. The silicon oxide may be a substance compounded from two or more of SiO_{0.2}, SiO_{0.5}, SiO_{0.8}, SiO, SiO_{1.2}, SiO_{1.5}, SiO_{1.8}, and SiO₂, etc., or a compound with a chemical formula being SiOₓ, which may also definitely be other values within the above range, and the present disclosure is not limited thereto.

In some implementations, the silicon material includes at least one of crystalline silicon, amorphous silicon, and a complex of the crystalline silicon and the amorphous silicon. Preferably, the silicon material is the amorphous silicon. Compared to other types of silicon, the amorphous silicon is lower in expansion, facilitating improvement of the problem of large volume expansion of a silicon carbon anode material during a lithium detachment/embedding process.

In some implementations, the silicon material includes silicon particles. The shape of the silicon particles includes at least one of a dot shape, a spherical shape, an ellipsoidal shape, and a flaky shape.

In some implementations, a mass content of silicon in the silicon material is ≥99%.

In some implementations, a mass proportion of the silicon material in the anode material is 30%-80%, that is, a mass proportion of the silicon in the anode material is 30%-80%, which may specifically be 30%, 40%, 50%, 60%, 70%, or 80%, etc., which may also definitely be other values within the above range, and the present disclosure is not limited thereto. Within the above limited range, the mass proportion of the silicon material in the anode material, that is, the mass proportion of the silicon in the anode material, is higher, facilitating the improvement of the capacity of the anode material.

In some implementations, an average particle size of the silicon material is 0.1 nm-500 nm, which may be, for example, 0.1 nm, 1 nm, 5 nm, 10 nm, 30 nm, 50 nm, 100 nm, 200 nm, 300 nm, 400 nm, or 500 nm, etc., or may also definitely be other values within the above range, and the present disclosure is not limited thereto. Within the above limited range, stress and deformation generated by the silicon material during lithium ion detachment/embedding are buffered, thereby improving the capacity and cycling performance of the anode material. Preferably, the average particle size of the silicon material is 0.1 nm-10 nm, and more preferably, the average particle size of the silicon material is 0.1 nm-5 nm.

In some implementations, the anode material further includes a coating layer that is distributed on at least partial surface of the porous carbonaceous material. Through the arrangement of the coating layer, in an aspect, side reactions caused by electrolyte entering the anode material to cause a reduction in first efficiency and capacity may be reduced, and in another aspect, the coating layer may cooperate with the porous carbonaceous material to buffer the volume expansion of the silicon material, thereby reducing the volume expansion of the entire anode material, and reducing the swelling of an electrode plate.

In some implementations, the coating layer includes at least one of a carbon layer, a metal oxidation layer, and a nitride layer.

In some implementations, a material of the carbon layer includes at least one of graphene, soft carbon, hard carbon, and a conducting polymer. Specifically, the conductive polymer includes at least one of polyaniline, polyacetylene, polypyrrole, polythiophene, poly(3-hexylthiophene-2,5-diyl), poly-phenylene vinylene, polypyridine, and polyphenylene vinylene.

In some implementations, the metal oxidation layer includes at least one of titanium oxide, aluminum oxide, lithium oxide, cobalt oxide, and vanadium oxide.

In some implementations, the nitride layer includes at least one of titanium nitride, vanadium nitride, cobalt nitride, nickel nitride, and carbon nitride.

In some implementations, a thickness of the coating layer is 0.1 nm-100 nm, which may specifically be 0.1 nm, 1 nm, 10 nm, 30 nm, 50 nm, 70 nm, 90 nm, or 100 nm, etc., or may also definitely be other values within the above range, and the present disclosure is not limited thereto. When the thickness of the coating layer is within the above range, while the electrochemical performance of the anode material, such as capacity and rate performance, is taken into consideration, the cycling performance of the anode material is improved.

In some implementations, a pore volume of the porous carbonaceous material is greater than or equal to 0.4 cm³/g, which may be, for example, 0.4 cm³/g, 0.5 cm³/g, 0.7 cm³/g, 1.0 cm³/g, 1.5 cm³/g, 2.0 cm³/g, 2.5 cm³/g, 3 cm³/g, 3.5 cm³/g, or 5.0 cm³/g, etc., or may also definitely be other values within the above range, and the present disclosure is not limited thereto. Within the above limited range, it indicates that there are more activated pores of the porous carbonaceous material of the present disclosure, facilitating the deposition of more silicon materials by the porous carbonaceous material, thereby improving the capacity performance of the anode material. Preferably, the pore volume of the porous carbonaceous material is greater than or equal to 0.5 cm³/g, and more preferably, the pore volume of the porous carbonaceous material is greater than or equal to 0.7 cm³/g.

In some implementations, the porous carbonaceous material is the anode material with the silicon material removed, and a preparation method thereof may further include the following steps: while stirring, 150 mL of an HF acid solution with a mass fraction of 20% is dropwise added to 10 g of the anode material to generate SiF₄ and a H₂ gas and release heat, until there is no gas generated, the supernatant acid solution is removed through centrifugation, then 150 mL of the HF acid solution with the mass fraction of 20% is added to the anode material again, stirring is performed for 12 h, then the supernatant acid solution is removed again through centrifugation, and then the anode material is washed with pure water to neutral and dried, so as to obtain the anode material with the silicon material removed.

In some implementations, a median particle size of the anode material is less than or equal to 10 µm, which may be, for example, 1 µm, 3 µm, 5 µm, 7 µm, 9 µm, or 10 µm, etc., or may also definitely be other values within the above range, and the present disclosure is not limited thereto. By controlling the median particle size of the anode material within the above range, the cycling performance of a battery prepared by the anode material is improved.

In some implementations, a specific surface area of the anode material is less than 5 m²/g, which may be, for example, 1 m²/g, 2 m²/g, 3 m²/g, 4 m²/g, or 4.5 m²/g, etc., or may also definitely be other values within the above range, and the present disclosure is not limited thereto. It may be understood that, by controlling the specific surface area of the anode material within the above range, the volume expansion of the anode material can be inhibited, and the cycling performance of a battery prepared by the anode material is improved.

In some implementations, the conductivity of the anode material is greater than or equal to 10⁻¹ S/m, which may be, for example, 10⁻¹ S/m, 0.5 S/m, 1 S/m, 2 S/m, 3 S/m, 4 S/m, 5 S/m, or 6 S/m, etc. Within the above limited range, the transmission of electrons inside the anode material is realized, thereby improving the rate performance of the battery prepared by the anode material during charging and discharging.

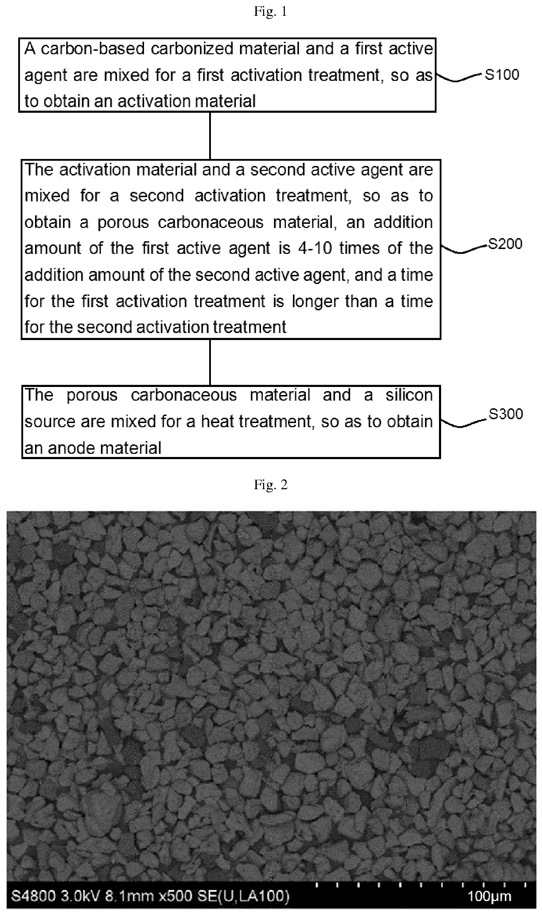

The present disclosure further provides a method for preparing the anode material. Fig. 1 is a preparation flowchart of the anode material according to the present disclosure, including the following steps.

At S100, a carbon-based carbonized material and a first active agent are mixed for a first activation treatment, so as to obtain an activation material.

At S200, the activation material and a second active agent are mixed for a second activation treatment, so as to obtain a porous carbonaceous material, an addition amount of the first active agent is 4-10 times of the addition amount of the second active agent, and a time for the first activation treatment is longer than a time for the second activation treatment.

At S300, the porous carbonaceous material and a silicon source are mixed for a heat treatment, so as to obtain an anode material.

In the above solution, in the present disclosure, the carbon-based carbonized material is sequentially subjected to activation for two times. In the first activation treatment, the addition amount of the first active agent is 4-10 times of the addition amount of the second active agent, and the time for the first activation treatment is longer than the time for the second activation treatment, indicating that the activation capability of the first activation treatment on the carbon-based carbonized material is strong, such that more activated pores are formed inside the prepared activation material, and a pore diameter distribution range of the activated pores is large. The activation capability of the second activation treatment is weak. The second activation treatment can perform further activation in an unactivated region of the activation material, so as to form the activated pores with a small pore diameter, and at the same time, expand the pores with a too small pore diameter after the first activation treatment, such that the prepared porous carbonaceous material contains a large number of uniformly-distributed activated pores. In the present disclosure, by controlling the two activation treatments, the porous carbonaceous material with good consistency can be prepared, and then the silicon source is deposited in the porous carbonaceous material. The silicon material is mainly distributed in the activated pores of the porous carbonaceous material. By increasing the dispersivity and deposition amount of the silicon material in the anode material, a uniformity degree N of the anode material meets N≥80%, such that a volume effect caused by agglomeration of the silicon material during lithium intercalation/lithium detachment can be inhibited, and pulverization of the particles of the anode material is reduced. Meanwhile, during the lithium intercalation/lithium detachment of the anode material, an SEI film is formed within a limited space, such that the stable SEI film is formed, and the structure stability of the anode material is improved, thereby improving the expansion performance, cycling performance, and capacity of the anode material. In the present disclosure, activation degrees of the controlling of the two activation treatments are different, and the porous carbonaceous material with good consistency is prepared, such that the process is simple, large-scale preparation may be realized, and the electrochemical performance of the battery as the anode material can be improved.

The preparation method of the present disclosure is specifically introduced with reference to embodiments.

At S100, the carbon-based carbonized material and the first active agent are subjected to first mixing, so as to obtain the activation material.

In some implementations, the carbon-based carbonized material is obtained by carbonizing a carbon-based raw material.

In some implementations, the carbon-based raw material includes at least one of lignin, coconut husks, nut shells, peanut shells, rice husks, coal-to-biomass, and resin.

In some implementations, a carbonization temperature is 400°C-900°C, which may specifically be 400°C, 500°C, 600°C, 650°C, 700°C, 750°C, 800°C, 850°C, or 900°C, etc., or may also definitely be other values within the above range, and the present disclosure is not limited thereto.

In some implementations, a carbonization time is 1 h-20 h, which may specifically be 1 h, 3 h, 5 h, 10 h, 12 h, 15 h, 18 h, or 20 h, etc., or may also definitely be other values within the above range, and the present disclosure is not limited thereto.

In some implementations, carbonization is performed under a protective gas atmosphere. The protective gas atmosphere includes at least one of nitrogen, helium, neon, argon, krypton, and xenon.

In some implementations, after the carbon-based carbonized material is obtained, the method further includes: acid pickling is performed on the carbon-based carbonized material, and an acid for acid pickling includes at least one of hydrochloric acid, sulfuric acid, nitric acid, hydrofluoric acid, phosphoric acid, perchloric acid, acetic acid, and benzoic acid.

In some implementations, a concentration of a solution for acid pickling is 1 mol/L-10 mol/L, which may be, for example, 1 mol/L, 3 mol/L, 5 mol/L, 8 mol/L, or 10 mol/L, etc., or may definitely be other values within the above range, and is not limited herein. It may be understood that, the purpose of acid pickling is to remove impurities in a material. The carbon-based carbonized material is subjected to acid pickling and then is washed with deionized water, and a product is washed to neutral.

In some implementations, a time for acid pickling is 3 h-8 h, which may be, for example, 3 h, 4 h, 5 h, 6 h, 7 h, or 8 h, etc., or may definitely be other values within the above range, and is not limited herein.

In some implementations, the first active agent includes an alkaline substance.

In some implementations, the alkaline substance includes at least one of sodium hydroxide, potassium hydroxide, lithium hydroxide, calcium hydroxide, and rubidium hydroxide.

In some implementations, a mass ratio of the carbon-based carbonized material to the first active agent is 1:(0.5-30), which may specifically be, 1:0.5, 1:1, 1:5, 1:10, 1:20, or 1:30, etc., or may definitely be other values within the above range, and is not limited herein. Within the above limited range, more first active agent is added, and the activation capability is strong, such that a large number of uniformly-distributed activated pores can be formed in the carbon-based carbonized material, facilitating subsequent filling of the silicon material in the activated pores. If more first active agent is added, a pore diameter of a pore structure in the activation material is relatively large, and there are more pores, easily leading to structure collapse in the anode material during detachment/embedding, thus resulting in reduction in the cycling performance of the anode material. If less first active agent is added, the appropriate number of uniformly-distributed activated pores cannot be formed inside the carbon-based carbonized material, not facilitating the subsequent deposition of the silicon source; and the anode material has large volume expansion, causing the capacity and expansion performance of the anode material to reduce.

In some implementations, the first active agent includes at least one of water vapor, oxygen, and air. The carbon-based carbonized material is activated by using the gaseous first active agent, and reacts with carbon to generate hydrogen and carbon monoxide through the gaseous water vapor, oxygen, and air at a high temperature, such that the carbon-based carbonized material is etched by using this reaction to obtain the activated pores.

In some implementations, a concentration of the first active agent is 3%-20%, which may specifically be 3%, 5%, 7%, 9%, 10%, 12%, 15%, 18%, or 20%, etc., or may also definitely be other values within the above range, and the present disclosure is not limited thereto. Within the above limited range, more first active agent is added, and the activation capability is strong, such that a large number of uniformly-distributed activated pores can be formed in the carbon-based carbonized material, facilitating subsequent filling of the silicon material in the activated pores.

It may be understood that, when the first active agent is the water vapor, a concentration of the water vapor may be considered as the humidity of the water vapor.

In some implementations, a time for the first activation treatment is 5 h-20 h, which may be, for example, 5 h, 8 h, 10 h, 12 h, 15 h, 18 h, or 20 h, etc., or may also definitely be other values within the above range, and the present disclosure is not limited thereto.

In some implementations, a temperature for the first activation treatment is 900°C-1200°C, which may specifically be 900°C, 930°C, 950°C, 1000°C, 1100°C, or 1200°C, etc., or may also definitely be other values within the above range, and the present disclosure is not limited thereto.

At S200, the activation material and the second active agent are mixed for the second activation treatment, so as to obtain the porous carbonaceous material, the addition amount of the first active agent is 4 times-10 times of the addition amount of the second active agent, and the time for the first activation treatment is longer than the time for the second activation treatment.

In the present disclosure, by limiting the addition amount of the first active agent to be 4 times-10 times of the addition amount of the second active agent, the time for the first activation treatment is longer than the time for the second activation treatment, such that two activation treatments are performed on the carbon-based carbonized material, so as to obtain the porous carbonaceous material with a large number of uniformly-distributed activated pores.

In some implementations, the addition amount of the first active agent is 4 times-10 times of the addition amount of the second active agent, which may specifically be 4 times, 5 times, 6 times, 7 times, 8 times, 9 times, or 10 times, etc., or may also definitely be other values within the above range, and the present disclosure is not limited thereto. If too little second active agent is added, the activation capability of the second activation treatment is poor, the effect of increasing the activated pores cannot be achieved, causing the activated pores of the porous carbonaceous material to be less in number and poor in distribution uniformity; and if more second active agent is added, the activated pores formed through the first activation treatment are easily subjected to secondary pore expansion to form mesopores or macropores, not facilitating the dispersion uniformity of subsequent deposition of the silicon source, thus resulting in poor expansion performance of the prepared anode material.

It may be understood that, the first active agent and the second active agent may be gaseous active agents, or may also be solid-state active agents. When the first active agent and the second active agent are the gaseous active agents, the addition amount may indicate an introduction concentration of the gaseous active agent; and when the first active agent and the second active agent are the solid-state active agents, the addition amount may indicate addition mass of the solid-state active agent. If the first active agent is the gaseous active agent, and the second active agent is the solid-state active agent, those skilled in the art may learn an activation difference between the gaseous active agent and the solid-state active agent according to experience, so as to determine the concentration of the gaseous active agent and the addition mass of the solid-state active agent.

In some implementations, the second active agent includes an alkaline substance.

In some implementations, the alkaline substance includes at least one of sodium hydroxide, potassium hydroxide, lithium hydroxide, calcium hydroxide, and rubidium hydroxide.

In some implementations, a mass ratio of the carbon-based carbonized material to the second active agent is 1:(0.1-10), which may specifically be, 1:0.1, 1:0.5, 1:1.5, 1:3, 1:5, or 1:10, etc., or may definitely be other values within the above range, and is not limited herein. If too little second active agent is added, secondary effective activation cannot be performed on the activation material prepared in S100; and if more second active agent is added, the pore diameter after secondary pore expansion is too large, the subsequent deposition of the silicon material is affected, causing the silicon material to easily agglomerate, thus causing the anode material to have a large volume effect. The anode material is easy to generate cracks or even pulverize during use, not facilitating the improvement of the expansion performance of the material. Furthermore, an inner pore diameter of porous carbon is relatively large, leading to easy collapse of the material, thus resulting in poor structure stability. Preferably, the mass ratio of the carbon-based carbonized material to the second active agent is 1:(0.1-3).

In some implementations, the second active agent includes at least one of water vapor, oxygen, and air.

In some implementations, a concentration of the second active agent is 0.1%-5%, which may specifically be 0.1%, 0.3%, 0.8%, 1%, 2%, 3%, 4%, or 5%, etc., or may also definitely be other values within the above range, and the present disclosure is not limited thereto. Within the above limited range, the addition amount of the second active agent is small. In an aspect, the activated pores obtained through the first activation treatment can be expanded, and the pore diameter after pore expansion is not too large, facilitating the subsequent filling of the silicon material; and in another aspect, the second active agent can perform activation treatment on the activation material in an unactivated region, so as to obtain the activated pores with a small pore diameter, such that the prepared porous carbonaceous material has more activated pores, and the activated pores are uniformly distributed. If the concentration of second active agent is less than 0.1%, secondary effective activation cannot be performed on the activation material prepared in S100; and if the concentration of second active agent is greater than 5%, the pore diameter after secondary pore expansion is too large, the subsequent deposition of the silicon material is affected, causing the silicon material to easily agglomerate, thus causing the anode material to have a large volume effect. The anode material is easy to generate cracks or even pulverize during use, not facilitating the improvement of the expansion performance of the material. Furthermore, an inner pore diameter of porous carbon is relatively large, leading to easy collapse of the prepared anode material, thus resulting in poor structure stability.

In some implementations, a time for the second activation treatment is 3 h-10 h, which may be, for example, 3 h, 4 h, 5 h, 6 h, 7 h, 8 h, 9 h, or 10 h, etc., or may also definitely be other values within the above range, and the present disclosure is not limited thereto. Within the above limited range, the prepared porous carbonaceous material has a large number of uniformly-distributed activated pores, thereby facilitating the subsequent deposition of the silicon material in the porous carbonaceous material. If the time for the second activation treatment is too short, secondary effective activation cannot be performed on the activation material prepared in S100, such that the deposition amount of the subsequent silicon material in the porous carbonaceous material is small, resulting in degradation of performance; and if the time for the second activation treatment is too long, the pore diameter after secondary pore expansion is too large, the subsequent deposition of the silicon material is affected, causing the anode material to have a large volume effect. The anode material is easy to generate cracks or even pulverize during use, not facilitating the improvement of the expansion performance of the material. Furthermore, an inner pore diameter of porous carbon is relatively large, leading to easy collapse of the prepared anode material, thus resulting in poor structure stability.

In some implementations, a temperature for the second activation treatment is 800°C-1000°C, which may specifically be 800°C, 830°C, 85°C, 900°C, 950°C, or 1000°C, etc., or may also definitely be other values within the above range, and the present disclosure is not limited thereto. In some implementations, by limiting the temperature for the first activation treatment to be greater than the temperature for the second activation treatment, the activation degrees of two activation treatments are different and have a large difference, such that the porous carbonaceous material with good consistency is prepared.

To sum up, in the present disclosure, the porous carbonaceous material having the appropriate number of uniformly-distributed activated pores is prepared by controlling the addition amount of the active agents of two activation treatments, the activation temperature, and the activation time.

At S300, the porous carbonaceous material and the silicon source are mixed for the heat treatment, so as to obtain the anode material.

In some implementations, the silicon source includes at least one of monosilane, disilane, and trisilane.

In some implementations, an introduction flow rate of the silicon source is 0.1 L/min-1000 L/min, which may specifically be 0.1 L/min, 1 L/min, 10 L/min, 100 L/min, 300 L/min, 600 L/min, or 1000 L/min, etc., or may also definitely be other values within the above range, and the present disclosure is not limited thereto.

In some implementations, a temperature for the heat treatment is 300°C-800°C, which may specifically be 300°C, 400°C, 500°C, 600°C, 700°C, or 800°C, etc., or may also definitely be other values within the above range, and the present disclosure is not limited thereto.

In some implementations, a time for the heat treatment is 2 h-25 h, which may specifically be 2 h, 5 h, 10 h, 15 h, 20 h, or 25 h, etc., or may also definitely be other values within the above range, and the present disclosure is not limited thereto.

In some implementations, after the porous carbonaceous material and the silicon source are mixed for the heat treatment, the method further includes: a material obtained through the heat treatment and a coating material are mixed and heated.

In some implementations, the coating material includes at least one of a carbon source, a metal oxide, and a nitride.

In some implementations, the nitride includes at least one of titanium nitride, vanadium nitride, cobalt nitride, nickel nitride, and carbon nitride.

In some implementations, the metal oxide includes at least one of iron oxide, zinc oxide, tin oxide, copper oxide, and titanium oxide.

In some implementations, the carbon source includes at least one of a gaseous carbon source and a solid-state carbon source.

In some implementations, the gaseous carbon source includes at least one of acetylene, methane, propylene, benzene, ethanol, methanol, ethylene, propane, and butane.

In some implementations, an introduction flow rate of the gaseous carbon source is 0.1 L/min-1000 L/min, which may specifically be 0.1 L/min, 1 L/min, 10 L/min, 100 L/min, 300 L/min, 600 L/min, or 1000 L/min, etc., or may also definitely be other values within the above range, and the present disclosure is not limited thereto.

In some implementations, the solid carbon source includes at least one of sucrose, fructose, glucose, asphalt, phenolic resin, polyimide, citric acid, epoxy resin, amino resin, polystyrene, polyacrylic acid, carboxymethyl cellulose, and acetic acid butyric acid fiber.

In some implementations, a mass ratio of the solid carbon source to the material obtained through the heat treatment is (1-100):100, which may specifically be 1:100, 10:100, 30:100, 50:100, 80:100, or 100:100, etc., or may also definitely be other values within the above range, and the present disclosure is not limited thereto.

In some implementations, a temperature for the heating treatment is 600°C-1100°C, which may specifically be 600°C, 650°C, 700°C, 800°C, 900°C, 1000°C, or 1100°C, etc., or may also definitely be other values within the above range, and the present disclosure is not limited thereto. If the temperature for the heating treatment is lower than 600°C, the coating material is carbonized incompletely, and a compact coating layer cannot be obtained, and if the temperature for the heating treatment is higher than 1100°C, the silicon material is crystallized, resulting in degradation of the cycling performance and expansion performance of the anode material.

In some implementations, a temperature-holding time for the heating treatment is 2 h-10 h. Specifically, the temperature-holding time for the heating treatment may be, for example, 2 h, 5 h, 7 h, 8 h, or 10 h, etc., or may also definitely be other values within the above range, and the present disclosure is not limited thereto.

In some implementations, after the material obtained through the heat treatment and the coating material are mixed and heated, the method further includes: steps of sieving and grading are performed on the obtained material.

In a third aspect, the present disclosure provides a lithium ion battery. The lithium ion battery includes the anode material or an anode material prepared by the preparation method.

It will be understood by those skilled in the art that the method for preparing a lithium ion battery described above is only embodiments. Other methods commonly used in the art may be used without departing from the contents disclosed in the present disclosure.

The embodiments of the present disclosure are further described below with a plurality of embodiments. The embodiments of the present disclosure are not limited to the following specific embodiments. Changes may be implemented appropriately within the scope of unchanged primary rights.

### Embodiment 1

(1) 10 g of bamboo carbon was placed in a carbonization furnace for a carbonization treatment, a carbonization temperature was 800°C, a carbonization time was 7 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was dried and then subjected to a water vapor activation treatment, a mixed gas of water vapor and a nitrogen gas was introduced, a concentration of the water vapor was 9%, an activation time was 18 h, an activation temperature was 900°C, and an activation material was obtained.
(3) The activation material was subjected to secondary water vapor activation treatment, the mixed gas of the water vapor and the nitrogen gas was introduced, the concentration of the water vapor was 2%, the activation time was 3 h, the activation temperature was 900°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720°C, the temperature was held for 2 h, and an obtained sample was sieved and graded to obtain an anode material.

The anode material obtained in this embodiment included a core and a carbon coating layer covering a surface of the core. The core included the porous carbonaceous material and silicon particles distributed inside and on a surface of the porous carbonaceous material. Data such as a uniformity degree N of the anode material, and a median particle size, specific surface area, and conductivity of the anode material prepared in this embodiment, as well as a pore volume of the porous carbonaceous material, a volume proportion and average pore diameter of micropores in the porous carbonaceous material, and mass proportion data of the silicon particles (silicon) in the anode material, was shown in Table 1.

In a SEM-BSE diagram of the anode material prepared in this embodiment, from Fig. 2, it might be learned that, the anode material prepared in this embodiment might be divided into typical particles of first brightness and particles of second brightness. Furthermore, in the anode materials in bulk, there was a relatively large number proportion of the anode material particles having the second brightness, indicating that, in the present disclosure, the anode material in which the silicon material was deposited in the porous carbonaceous material with an appropriate number and uniform distribution could be obtained.

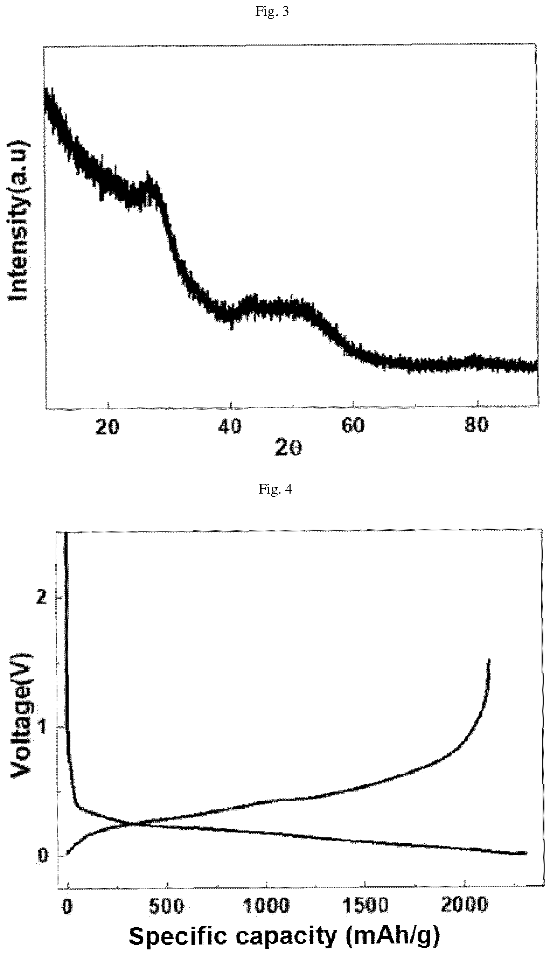

An XRD diagram of the anode material prepared in this embodiment was shown in Fig. 3. From Fig. 3, it might be learned that, the anode material had no characteristic peak at positions 25°-30° for diffraction packages, indicating that amorphous silicon was present in the anode material, that is, the silicon deposited in the porous carbonaceous material was the amorphous silicon, facilitating reduction of volume expansion of the anode material.

A first charging and discharging curve of the anode material prepared in this embodiment was shown in Fig. 4. From Fig. 4, it might be learned that, a first charging and discharging capacity of the anode material was high, and first efficiency was also high.

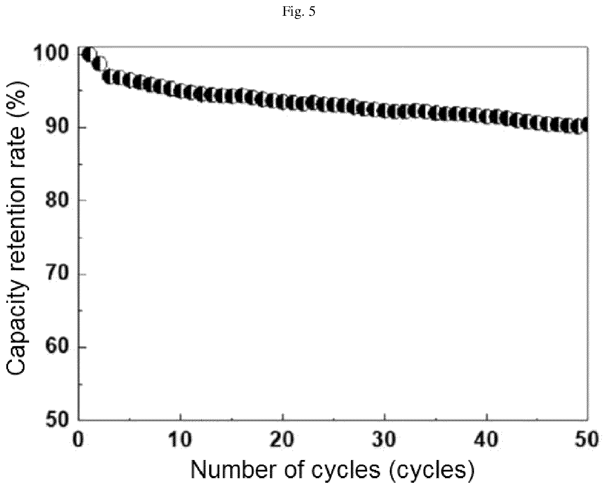

A cycling performance curve of the anode material of the anode material prepared in this embodiment is shown in Fig. 5. From Fig. 5, it might be seen that, the anode material had excellent cycling performance, and a capacity retention rate for 50 cycles was 92.2%.

### Embodiment 2

(1) 10 g of coconut husks were placed in a carbonization furnace for a carbonization treatment, a carbonization temperature was 800°C, a carbonization time was 10 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was dried and then subjected to a water vapor activation treatment, a mixed gas of water vapor and a nitrogen gas was introduced, a concentration of the water vapor was 3.5%, an activation time was 12 h, an activation temperature was 950°C, and an activation material was obtained.
(3) The activation material was subjected to secondary water vapor activation treatment, the mixed gas of the water vapor and the nitrogen gas was introduced, the concentration of the water vapor was 0.5%, the activation time was 6 h, the activation temperature was 950°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720°C, the temperature was held for 2 h, and an obtained sample was sieved and graded to obtain an anode material.

The anode material obtained in this embodiment included a core and a carbon coating layer covering a surface of the core. The core included the porous carbonaceous material and silicon particles distributed inside and on a surface of the porous carbonaceous material. Data such as a uniformity degree N of the anode material, and a median particle size, specific surface area, and conductivity of the anode material prepared in this embodiment, as well as a pore volume of the porous carbonaceous material, a volume proportion and average pore diameter of micropores in the porous carbonaceous material, and mass proportion data of the silicon particles (silicon) in the anode material, was shown in Table 1.

### Embodiment 3

(1) 10 g of nut shells were placed in a carbonization furnace for a carbonization treatment, a carbonization temperature was 950°C, a carbonization time was 5 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was dried and then subjected to a water vapor activation treatment, a mixed gas of water vapor and a nitrogen gas was introduced, a concentration of the water vapor was 5.7%, an activation time was 14 h, an activation temperature was 950°C, and an activation material was obtained.
(3) The activation material was subjected to an alkali activation treatment, the alkali was sodium hydroxide, an addition amount of the sodium hydroxide was 3% of the mass of the nut shells, an activation time was 9 h, an activation temperature was 950°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720°C, the temperature was held for 2 h, and an obtained sample was sieved and graded to obtain an anode material.

The anode material obtained in this embodiment included a core and a carbon coating layer covering a surface of the core. The core included the porous carbonaceous material and silicon particles distributed inside and on a surface of the porous carbonaceous material. Data such as a uniformity degree N of the anode material, and a median particle size, specific surface area, and conductivity of the anode material prepared in this embodiment, as well as a pore volume of the porous carbonaceous material, a volume proportion and average pore diameter of micropores in the porous carbonaceous material, and mass proportion data of the silicon particles (silicon) in the anode material, was shown in Table 1.

### Embodiment 4

(1) 10 g of nut shells were placed in a carbonization furnace for a carbonization treatment, a carbonization temperature was 950°C, a carbonization time was 5 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was dried and then subjected to a water vapor activation treatment, a mixed gas of water vapor and a nitrogen gas was introduced, a concentration of the water vapor was 14.5%, an activation time was 8 h, an activation temperature was 990°C, and an activation material was obtained.
(3) The activation material was subjected to secondary water vapor activation treatment, the mixed gas of the water vapor and the nitrogen gas was introduced, the concentration of the water vapor was 1.5%, the activation time was 5 h, the activation temperature was 850°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720°C, the temperature was held for 2 h, and an obtained sample was sieved and graded to obtain an anode material.

The anode material obtained in this embodiment included a core and a carbon coating layer covering a surface of the core. The core included the porous carbonaceous material and silicon particles distributed inside and on a surface of the porous carbonaceous material. Data such as a uniformity degree N of the anode material, and a median particle size, specific surface area, and conductivity of the anode material prepared in this embodiment, as well as a pore volume of the porous carbonaceous material, a volume proportion and average pore diameter of micropores in the porous carbonaceous material, and mass proportion data of the silicon particles (silicon) in the anode material, was shown in Table 1.

### Embodiment 5

(1) 10 g of nut shells were placed in a carbonization furnace for a carbonization treatment, a carbonization temperature was 950°C, a carbonization time was 5 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was dried and then subjected to a water vapor activation treatment, a mixed gas of water vapor and a nitrogen gas was introduced, a concentration of the water vapor was 20%, an activation time was 5 h, an activation temperature was 1050°C, and an activation material was obtained.
(3) The activation material was subjected to secondary water vapor activation treatment, the mixed gas of the water vapor and the nitrogen gas was introduced, the concentration of the water vapor was 5%, the activation time was 3 h, the activation temperature was 900°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720 °C, the temperature was held for 2 h, and an obtained sample was sieved and graded to obtain an anode material.

The anode material obtained in this embodiment included a core and a carbon coating layer covering a surface of the core. The core included the porous carbonaceous material and silicon particles distributed inside and on a surface of the porous carbonaceous material. Data such as a uniformity degree N of the anode material, and a median particle size, specific surface area, and conductivity of the anode material prepared in this embodiment, as well as a pore volume of the porous carbonaceous material, a volume proportion and average pore diameter of micropores in the porous carbonaceous material, and mass proportion data of the silicon particles (silicon) in the anode material, was shown in Table 1.

### Embodiment 6

(1) 10 g of nut shells were placed in a carbonization furnace for a carbonization treatment, a carbonization temperature was 950°C, a carbonization time was 5 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was subjected to an alkali activation treatment, the alkali was sodium hydroxide, an addition amount of the sodium hydroxide was 15% of the mass of the nut shells, an activation time was 10 h, an activation temperature was 950°C, and an activation material was obtained.
(3) The activation material was subjected to secondary alkali activation treatment, the alkali was sodium hydroxide, an addition amount of the sodium hydroxide was 3% of the mass of the nut shells, an activation time was 5 h, an activation temperature was 850°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720°C, the temperature was held for 2 h, and an obtained sample was sieved and graded to obtain an anode material.

The anode material obtained in this embodiment included a core and a carbon coating layer covering a surface of the core. The core included the porous carbonaceous material and silicon particles distributed inside and on a surface of the porous carbonaceous material. Data such as a uniformity degree N of the anode material, and a median particle size, specific surface area, and conductivity of the anode material prepared in this embodiment, as well as a pore volume of the porous carbonaceous material, a volume proportion and average pore diameter of micropores in the porous carbonaceous material, and mass proportion data of the silicon particles (silicon) in the anode material, was shown in Table 1.

### Embodiment 7

(1) 10 g of nut shells were placed in a carbonization furnace for a carbonization treatment, a carbonization temperature was 950°C, a carbonization time was 5 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was subjected to an alkali activation treatment, the alkali was sodium hydroxide, an addition amount of the sodium hydroxide was 10% of the mass of the nut shells, an activation time was 12 h, an activation temperature was 1000°C, and an activation material was obtained.
(3) The activation material was subjected to secondary alkali activation treatment, the alkali was sodium hydroxide, an addition amount of the sodium hydroxide was 1% of the mass of the nut shells, an activation time was 3 h, an activation temperature was 850°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720°C, the temperature was held for 2 h, and an obtained sample was sieved and graded to obtain an anode material.

The anode material obtained in this embodiment included a core and a carbon coating layer covering a surface of the core. The core included the porous carbonaceous material and silicon particles distributed inside and on a surface of the porous carbonaceous material. Data such as a uniformity degree N of the anode material, and a median particle size, specific surface area, and conductivity of the anode material prepared in this embodiment, as well as a pore volume of the porous carbonaceous material, a volume proportion and average pore diameter of micropores in the porous carbonaceous material, and mass proportion data of the silicon particles (silicon) in the anode material, was shown in Table 1.

### Comparative embodiment 1

(1) Bamboo carbon was placed in a carbonization furnace for a carbonization treatment, a carbonization temperature was 800°C, a carbonization time was 7 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was placed in a CVD device, then monosilane was introduced in the CVD device, a concentration of the monosilane was controlled to be 25%, a temperature was heated to 460°C, and a reaction was performed for 8 h.
(3) A material obtained in step (2) was placed in a reaction furnace, a methane gas was introduced, a concentration of the methane was 12%, a heat treatment was performed at 720°C, the temperature was held for 2 h, and an obtained sample was sieved and graded to obtain an anode material.

### Comparative embodiment 2

A difference between this comparative embodiment and Embodiment 1 lied in that, step (3) was not performed, and step (4) was directly performed on the activation material obtained in step (2).

### Comparative embodiment 3

A difference between this comparative embodiment and Embodiment 1 lied in that, step (2) was not performed, and step (3) was directly performed on the carbon-based carbonized material obtained in step (1).

### Comparative embodiment 4

(1) 10 g of nut shells were placed in a carbonization furnace for a carbonization treatment, a carbonization temperature was 950°C, a carbonization time was 5 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was dried and then subjected to a water vapor activation treatment, a mixed gas of water vapor and a nitrogen gas was introduced, a concentration of the water vapor was 9%, an activation time was 18 h, an activation temperature was 900°C, and an activation material was obtained.
(3) The activation material was subjected to secondary water vapor activation treatment, the mixed gas of the water vapor and the nitrogen gas was introduced, the concentration of the water vapor was 9%, the activation time was 16 h, the activation temperature was 900°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720°C, the temperature was held for 2 h, and an obtained sample was sieved and graded to obtain an anode material.

### Comparative embodiment 5

(1) 10 g of nut shells were placed in a carbonization furnace for a carbonization treatment, a carbonization temperature was 950°C, a carbonization time was 5 h, acid pickling was performed after carbonization, a concentration of a hydrochloric acid for acid pickling was 10 mol/L, an acid pickling time was 5 h, and a carbon-based carbonized material was obtained.
(2) The carbon-based carbonized material was dried and then subjected to a water vapor activation treatment, a mixed gas of water vapor and a nitrogen gas was introduced, a concentration of the water vapor was 9%, an activation time was 2 h, an activation temperature was 900°C, and an activation material was obtained.
(3) The activation material was subjected to secondary water vapor activation treatment, the mixed gas of the water vapor and the nitrogen gas was introduced, the concentration of the water vapor was 2%, the activation time was 12 h, the activation temperature was 900°C, and a porous carbonaceous material was obtained.
(4) The porous carbonaceous material was placed in a CVD device, then monosilane was introduced in the CVD device, a concentration of the monosilane was controlled to be 25%, a temperature was heated to 460°C, and a reaction was performed for 8 h.
(5) A material obtained in step (4) was placed in a reaction furnace, a methane gas was introduced, a concentration of the methane was 12%, a heat treatment was performed at 720°C, the temperature was held for 2 h, and an obtained sample was sieved and graded to obtain an anode material.

### Performance test

1. A pore volume of the porous carbonaceous material was tested by using BET pore distribution, and before the porosity was tested, the silicon material in the anode material needed to be etched by using HF.
2. The number or volume of the micropores of the porous carbonaceous material was determined through nitrogen desorption.
   A PhysiChem iPore620 pore diameter tester and a BET pore diameter distribution test method were used, an isothermal adsorption characteristic curve of the nitrogen gas was used, pore diameter distribution data of a material was obtained through DFT simulation analysis, and then the number of the micropores, average pore diameter, pore volume, and BET specific surface area of the material were obtained.
3. The mass M1 of the anode material was tested before the silicon material in the anode material, the mass of the anode material was then tested as M2 after the silicon material was etched with the HF, and (M2-M1)/M2 was a mass proportion of the silicon material in the anode material. Alternatively, a box atmosphere furnace (Model: SA2-9-17TP) was for burning under an oxygen atmosphere, causing silicon in a sample to react with silicon oxide to become silica; and carbon was burned and discharged as carbon dioxide, and the mass content of the silicon in the anode material was weighed and calculated.
4. The median particle size of the anode material was tested by using a laser particle size analyzer.
   Granularity was measured by using a Mastersizer 3000 laser diffraction technology. When a laser beam passed through scattered particle samples, granularity measurement was completed by measuring the intensity of scattered light. Then, the data was used to analyze and calculate particle size distribution forming a scattered spectrogram. D50 indicated a corresponding particle size when the percentage of cumulative particle size distribution of volume distribution of a sample reaches 50%. The physical significance of D50 was that particles of which particle size was greater than D50 accounted for 50%, and particles of which particle size was less than D50 also accounted for 50%. D50 was also referred to as the median particle size. D90, D50, and D10 were equivalent diameters of maximum particles when cumulative distributions in a volume distribution curve were 90%, 50%, and 10%, respectively.
5. After the silicon material in the porous carbonaceous material was etched with the HF, the average pore diameter of the pores was tested by using an American Micromeritics ASAP 2460 fully-automatic specific surface and porosity analyzer, and a gas used during testing was CO₂ or N₂.
   Etching method: a nitric acid solution with a concentration of 1 M was added in the anode material for soaking for 4 h; then an HF acid solution with a 20% mass fraction was added dropwise to the anode material, yellow smoke was produced, and the acid solution was repeated added dropwise for a plurality of times, until there no yellow smoke produced in the solution; and finally, the nitric acid solution with the concentration of 1 M was used again to eliminate residue, and then washing and drying were performed to obtain the anode material with the silicon material removed. The etching method might further include the following steps: while stirring, 150 mL of an HF acid solution with a mass fraction of 20% was dropwise added to 10 g of the anode material to generate SiF₄ and a H₂ gas and release heat, until there was no gas generated, the supernatant acid solution is removed through centrifugation, then 150 mL of the HF acid solution with the mass fraction of 20% was added to the anode material again, stirring was performed for 12 h, then the supernatant acid solution was removed again through centrifugation, and then the anode material was washed with pure water to neutral and dried, so as to obtain the anode material with the silicon material removed.
6. A method for testing the average particle size of the silicon material: mathematical statistics was directly performed on a diameter of the silicon material in a transmission electron microscope.
7. The model of the SEM was HITACHI S4800, and test conditions: a voltage was 3 kV, and a current was 10 µA.
8. Thickness of a coating layer: section treatment was performed on the material by using an FIB-SEM device, and measurement was performed in an SEM to obtain an average thickness of the coating layer.
9. Powder conductivity: an MCP-PD51 powder resistance test system of Mitsubishi Chemical was used to test the volume resistivity of an anode material powder through a four-probe method. The resistance of a powder at 4, 8, 12, 16, 20 KN was tested respectively by using an instrument, and then the conductivity and resistivity of the anode material powder were automatically calculated by a computer.
10. Specific surface area: a specific surface area was measured by using a TriStar3000 surface area and aperture analyzer from Micromeritics, USA.
11. The electrochemical performance of the anode material was tested using the following methods.

The anode material, a conductive agent, and a binder were dissolved and mixed in a solvent according to a mass percentage of 94:1:5, a solid content is controlled at 50%, the mixture was coated on a copper foil current collector, and vacuum drying was performed to prepare an anode plate; and then, a ternary cathode plate prepared by a traditional mature process, 1 mol/L of LiPF₆/EC+DMC+EMC (v/v=1:1:1) electrolyte, a Celgard2400 diaphragm, and a housing were assembled into a 18650 cylindrical single-cell battery by using a conventional production process. A charging and discharging test of the cylindrical battery is performed on a LAND battery test system of Wuhan Jinnuo Electronics Co., Ltd, at a normal temperature condition, charging and discharging are performed at a constant current of 0.2 C, and charging and discharging voltages are limited at 2.75-4.2 V. Test results were shown in Table 1-Table 2.

**Table 1 Uniformity degree test results of anode material of embodiments and comparative embodiments**

| Sa m ple | 100 µm* 1 00 µm regio n 1 | 100 µm*10 0 µm region 2 | 100 µm* 1 00 µm region 3 | 100 µm* 1 00 µm region 4 | 100 µm* 1 00 µm region 5 | 100 µm* 1 00 µm region 6 | 100 µm*10 0 µm region 7 | 100 µm* 1 00 µm region 8 | 100 µm*10 0 µm region 9 | 100 µm* 1 00 µm region 10 | Uniformi ty degree N |
|---|---|---|---|---|---|---|---|---|---|---|---|
| S1 | 92 | 93 | 91 | 93 | 90 | 90 | 93 | 92 | 92 | 91 | 91.7 |
| S2 | 98 | 99 | 99 | 98 | 99 | 99 | 99 | 99 | 98 | 99 | 98.7 |
| S3 | 80 | 79 | 82 | 81 | 80 | 80 | 82 | 81 | 82 | 81 | 80.8 |
| S4 | 90 | 88 | 89 | 89 | 89 | 91 | 90 | 89 | 90 | 89 | 89.4 |
| S5 | 90 | 91 | 91 | 88 | 89 | 89 | 90 | 90 | 88 | 89 | 89.5 |
| S6 | 87 | 87 | 88 | 85 | 85 | 86 | 87 | 87 | 88 | 89 | 86.9 |
| S7 | 93 | 92 | 93 | 92 | 92 | 91 | 92 | 94 | 92 | 93 | 92.4 |
| D1 | 15 | 23 | 24 | 20 | 24 | 21 | 19 | 18 | 20 | 19 | 20.4 |
| D2 | 75 | 76 | 75 | 77 | 76 | 76 | 75 | 76 | 76 | 77 | 75.9 |
| D3 | 59 | 59 | 59 | 60 | 61 | 61 | 60 | 60 | 60 | 61 | 60 |
| D4 | 78 | 78 | 77 | 76 | 77 | 78 | 76 | 76 | 76 | 76 | 76.8 |
| D5 | 74 | 75 | 74 | 74 | 76 | 76 | 75 | 75 | 75 | 74 | 74.8 |

**Table 2 Performance test results of anode material of embodiments and comparative embodiments**

| Sa mp le | Num ber propo rtion (%) of micro pores in porou s carbo naceo us mater ial | Volu me propo rtion (%) of micro pores in porou s carbo naceo us mater ial | Averag e pore diamet er (nm) of pores in porous carbon aceous materia 1 | Mass proport ion (%) of silicon materia 1 (silicon ) in anode materia 1 | Aver age partic le size (nm) of silico n mater ial | Pore volu me (cm³ /g) of poro us carb on mate rial | Medi an partic le size (µm) of anod e mater ial | Spe cifi c surf ace area (m² /g) of ano de mat eria 1 | Cond uctivi ty (S/m) of anod e mater ial | First rever sible capac ity (mAh /g) | Initia 1 coulo mbic effici ency (%) | Exp ansi on rate (%) of 50 cycl es | Ret enti on rate (%) of 50 cycl es |
|---|---|---|---|---|---|---|---|---|---|---|---|---|---|
| S1 | 89 | 89 | 1.4 | 45 | 1.5 | 0.6 | 10.9 | 2.2 | 0.9 | 1744 | 91.5 | 34. 2 | 92. 2 |
| S2 | 87 | 87 | 1.5 | 46.8 | 1.7 | 0.65 | 10.1 | 3.2 | 0.89 | 1813 | 92.4 | 35. 2 | 92. 3 |
| S3 | 83 | 83 | 1.6 | 48.4 | 1.9 | 0.72 | 10.6 | 2.9 | 0.94 | 1783 | 92.3 | 35. 9 | 91. 6 |
| S4 | 80.4 | 80.4 | 1.9 | 49.5 | 2.2 | 0.80 | 10.8 | 2.5 | 0.95 | 1834 | 92.1 | 36. 1 | 92. 2 |
| S5 | 88 | 88 | 1.5 | 40.2 | 1.6 | 0.82 | 10.9 | 3.1 | 1.5 | 1864 | 91.7 | 34. 4 | 92. 6 |
| S6 | 84 | 84 | 1.6 | 47.8 | 1.75 | 0.69 | 10.6 | 3.1 | 1.1 | 1793 | 91.8 | 35. 3 | 92. 5 |
| S7 | 81 | 81 | 1.7 | 48.2 | 1.8 | 0.72 | 10.8 | 3.2 | 0.9 | 1833 | 92.4 | 35. 4 | 92. 9 |
| D1 | 76.0 | 76.0 | / | 5 | 1.6 | 0.05 | 10.9 | 0.9 | 0.05 | 1513 | 89.3 | 45. 3 | 86. 9 |
| D2 | 64.5 | 64.5 | 2.5 | 43.5 | 2.1 | 0.60 | 10.5 | 2.5 | 0.8 | 1745 | 91.0 | 40. 1 | 88. 2 |
| D3 | 59.6 | 59.6 | 2.8 | 35.6 | 1.8 | 0.46 | 10.1 | 2.4 | 0.08 | 1703 | 90.9 | 38. 8 | 87. 6 |
| D4 | 53.8 | 53.8 | 6.2 | 47.5 | 2.1 | 0.99 | 10.7 | 2.5 | 0.92 | 1780 | 91.8 | 43. 6 | 86. 8 |
| D5 | 75.8 | 75.8 | 2.1 | 42.9 | 1.7 | 0.40 | 10.5 | 2.6 | 0.9 | 1693 | 91.5 | 36. 9 | 89. 0 |

As shown in Table 1 and Table 2, the anode material prepared in Embodiments 1-7 of the present disclosure included the porous carbonaceous material and the silicon material. The anode material had the uniformity degree N, where N≥80%, indicating that the porous carbonaceous material of the present disclosure has uniformly-distributed activated pores, and the number of the activated pores was appropriate, such that the silicon material could be mainly distributed in the pores of the porous carbonaceous material. Furthermore, the present disclosure was obtained by testing the anode material obtained in any one of the 100 µm*100 µm regions, indicating that the similarity in the number and distribution of the activated pores of the porous carbonaceous material of the particles of the anode material of the present disclosure was in a high degree, that is, the anode material of the present disclosure had the porous carbonaceous material with good consistency. The porous carbonaceous material with good consistency could improve the dispersivity of the silicon material in the anode material, a volume effect caused by agglomeration of the silicon material during lithium intercalation/lithium detachment was inhibited, and pulverization of the particles of the anode material was reduced. Meanwhile, during the lithium intercalation/lithium detachment of the anode material, an SEI film is formed within a limited space, such that the stable SEI film was formed on the surface of the anode material, and the structure stability of the anode material was improved, thereby improving the expansion performance, cycling performance, and capacity of the anode material.

The carbon-based carbonized material in Comparative embodiment 1 was not subjected to the activation treatment, and the silicon source was directly deposited, leading to an extremely small deposition amount of the silicon material in the anode material, and the uniformity degree N of the anode material was too small, resulting in the problems of low capacity, large expansion, and poor cycling performance of the battery prepared by the anode material.

In Comparative embodiment 2, only the activation treatment of step (2) was performed on the carbon-based carbonized material, and the activation treatment of step (3) was not performed, such that the distribution uniformity of the activated pores in the porous carbonaceous material was worse than that in Embodiment 1. The silicon source was deposited on the porous carbonaceous material, causing the distribution uniformity of the silicon material in the porous carbonaceous material to be poor, and the uniformity degree N of the anode material was < 80%, not meeting the limited range of the present disclosure, thus resulting in poor expansion and cycling performance of the anode material.

In Comparative embodiment 3, only the activation treatment of step (3) was performed on the carbon-based carbonized material, such that the number of the activated pores in the porous carbonaceous material was relatively small, and the distribution uniformity was worse than that in Embodiment 1, and also worse than that in Comparative embodiment 2. The silicon source was deposited on the porous carbonaceous material, causing the distribution uniformity of the silicon material in the porous carbonaceous material to be poor, and causing the amount of the deposited silicon material in the porous carbonaceous material to be small, and the uniformity degree N of the anode material was < 80%, not meeting the limited range of the present disclosure, thus resulting in poor expansion performance and cycling performance of the anode material.

In Comparative embodiment 4, two activation treatments were performed and had a small difference in degree, leading to the number of the pores of the prepared porous carbonaceous material to be large and a large pore diameter, thus easily causing the silicon material to agglomerate in the porous carbonaceous material, and the uniformity degree N of the anode material was < 80%, not meeting the limited range of the present disclosure, thus resulting in poor expansion performance of the anode material.

In Comparative embodiment 5, two activation treatments were performed, and the time for the first activation treatment is far shorter than the time for the second activation treatment. The pore volume of the prepared porous carbonaceous material was small, such that the deposition amount of the silicon source in the anode material is small, and the uniformity degree N of the anode material was < 80%, not meeting the limited range of the present disclosure, thus resulting in poor capacity performance and cycling performance of the anode material.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure shall fall within the scope of protection of the present disclosure.

## Claims

1. An anode material, comprising a porous carbonaceous material, wherein a silicon material is distributed inside the porous carbonaceous material, and the anode material has a uniformity degree N, and N≥80%;
in a Backscattered Electron (BSE) diagram obtained by scanning the anode material using a Scanning Electron Microscope (SEM) in a BSE automatic brightness and contrast mode, in any one of 100 µm*100 µm regions, the number of particles of the anode material having first brightness is recorded as C1, the particles of the anode material having the first brightness indicate the anode material with a gray value in the BSE diagram greater than or equal to 5500, the number of particles of the anode material having second brightness is recorded as C2, the particles of the anode material having the second brightness indicate the anode material with the gray value in the BSE diagram less than 5500, the anode material has a uniformity degree N'=C2/(C2+C1)*100% in the region, and the uniformity degree N of the anode material is an arithmetic mean of the uniformity degrees N' of at least 10 regions.

2. The anode material according to claim 1, wherein the anode material further comprises at least one of the following features (1)-(2):
(1) the porous carbonaceous material comprises micropores, and based on a total number of pores in the porous carbonaceous material being 100%, a number proportion of the micropores is greater than or equal to 80%; and
(2) the porous carbonaceous material comprises the micropores, and based on a total volume of the pores in the porous carbonaceous material, a volume proportion of the micropores is greater than or equal to 80%.

3. The anode material according to claim 1, wherein an average pore diameter of the pores in the porous carbonaceous material is less than or equal to 5 nm.

4. The anode material according to claim 1, wherein a mass proportion of the silicon material in the anode material is 30%-80%.

5. The anode material according to claim 1, wherein the silicon material is also distributed on at least partial surface of the porous carbonaceous material.

6. The anode material according to claim 1, wherein the porous carbonaceous material comprises at least one of hard carbon, soft carbon, graphite, a mesocarbon microbead, activated carbon, and carbon gel.

7. The anode material according to claim 1, wherein comprising at least one of the following features (1)-(4):
(1) the silicon material comprises silicon particles, and the shape of the silicon particles comprises at least one of a dot shape, a spherical shape, an ellipsoidal shape, and a flaky shape;
(2) the silicon material comprises at least one of crystalline silicon, a silicon oxide material, amorphous silicon, and silicon alloy;
(3) an average particle size of the silicon material is 0.1 nm-500 nm;
(4) a mass content of silicon in the silicon material is ≥99%.

8. The anode material according to claim 1, wherein the anode material further comprises a coating layer that is distributed on at least partial surface of the porous carbonaceous material.

9. The anode material according to claim 8, wherein the anode material comprises at least one of the following features (1)-(4):
(1) the coating layer comprises a carbon layer, and a material of the carbon layer comprises at least one of graphene, soft carbon, hard carbon, or a conducting polymer;
(2) the coating layer comprises a metal oxide layer, and a material of the metal oxide layer comprises at least one of titanium oxide, aluminum oxide, lithium oxide, cobalt oxide, and vanadium oxide,
(3) the coating layer comprises a nitride layer, and a material of the nitride layer comprises at least one of titanium nitride, vanadium nitride, cobalt nitride, nickel nitride, and carbon nitride;
(4) a thickness of the coating layer is 0.1 nm-100 nm.

10. The anode material according to claim 1, wherein a median particle size of the anode material is less than or equal to 10 µm.

11. The anode material according to claim 1, wherein a specific surface area of the anode material is less than 5 m²/g.

12. The anode material according to claim 1, wherein the conductivity of the anode material is greater than or equal to 10⁻¹ S/m.

13. The anode material according to claim 1, wherein a pore volume of the porous carbonaceous material is greater than or equal to 0.4 cm³/g.

14. A lithium ion battery, comprising the anode material according to any one of claims 1 to 13.
